# EUROPEAN PATENT APPLICATION

(11) **EP 4 593 305 A1**
(43) Date of publication of application: **30.07.2025**
(21) Application number: 23869884.9
(22) Date of filing: 30.06.2023
(51) Int. Cl.: H04B 10/032

(54) **OPTICAL FIBER TESTING METHOD, ELECTRONIC DEVICE, AND COMPUTER-READABLE STORAGE MEDIUM**

(30) Priority: 30.09.2022 CN 202211232436
(71) Applicant: ZTE CORPORATION, Shenzhen, Guangdong 518057 (CN)
(72) Inventor: LI, Yiqi, Shenzhen, Guangdong 518057 (CN); ZHU, Leheng, Shenzhen, Guangdong 518057 (CN)
(74) Representative: Ziebig Hengelhaupt Intellectual Property Attorneys Patentanwaltskanzlei PartGmbB
(86) International application number: PCT/CN2023/105386
(87) International publication number: WO 2024/066636

(57) **Abstract**

Disclosed in the present application are an optical fiber testing method, an electronic device, and a computer-readable storage medium. The optical fiber testing method comprises: determining target optical fibers to be tested; when the target optical fibers comprise a main optical fiber to be tested and a standby optical fiber to be tested which mutually serve as a main path and a standby path, determining a target position where the target optical fibers pass; determining a first time range corresponding to triggering a first target event at the target position and collecting first sensing data corresponding to said main optical fiber and second sensing data corresponding to said standby optical fiber within the first time range; and, according to the first sensing data and the second sensing data, determining same-routing information between said main optical fiber and said standby optical fiber.

## Description

### CROSS-REFERENCE TO RELATED APPLICATIONS

The present application claims priority to Chinese Patent Application No. 202211232436.4, filed on September 30, 2022, the entire content of which is incorporated herein by reference.

### TECHNICAL FIELD

The present application relates to the technical field of network communications, in particular to an optical fiber testing method, an electronic device, and a computer-readable storage medium.

### BACKGROUND

At present, in an optical transport network (OTN)/dense wavelength division multiplexing (DWDM) network, physical carriers of both a service path and a protection path are optical fibers, and in an actual laying process, optical fibers which mutually serve as a main path and a standby path are usually located in the same optical cable, or two optical cables where two optical fibers are located are in the same tube well.

However, due to construction, collapse and other factors, the optical fibers in the same tube well are destroyed by the outside, which results in damage to both main and standby routes, failure of a protection mechanism and severe influence on the service quality, so it is quite important to test a risk of optical fibers.

### SUMMARY

A main objective of the present application is to provide an optical fiber testing method, an electronic device, and a computer-readable storage medium, which is intended to solve the technical problem of how to improve the accuracy of checking the risk of the optical fiber.

In order to achieve the above objective, the present application provides an optical fiber testing method, including: determining target optical fibers to be tested; determining, upon the condition that the target optical fibers include a main optical fiber to be tested and a standby optical fiber to be tested which mutually serve as a main path and a standby path, a target position where the target optical fibers pass; determining a first time range corresponding to a moment when a first target event is triggered at the target position, and collecting first sensing data corresponding to the main optical fiber to be tested and second sensing data corresponding to the standby optical fiber to be tested within the first time range; and determining, according to the first sensing data and the second sensing data, same-routing information between the main optical fiber to be tested and the standby optical fiber to be tested.

In addition, for achieving the above objective, the present application further provides an electronic device, including: a processor; and a memory configured to store a computer-executable instruction, where the executable instruction, when executed, causes the processor to perform steps of the optical fiber testing method.

In addition, for achieving the above objective, the present application further provides a computer-readable storage medium, where the computer-readable storage medium stores one or more programs, and the one or more programs, when executed by an electronic device including a plurality of application programs, cause the electronic device to perform steps of the optical fiber testing method described above.

According to the present application, target optical fibers to be tested are determined at first, the target position where the target optical fibers pass is determined in a case where the target optical fibers include the main optical fiber to be tested and the standby optical fiber to be tested which mutually serve as the main path and the standby path, then the first sensing data corresponding to the main optical fiber to be tested and the second sensing data corresponding to the standby optical fiber to be tested are collected within the first time range which is before and after the moment when the first target event is triggered at the target position, and then risk checking of the same-routing information is performed according to the first sensing data and the second sensing data, so that it is not required to pull optical fibers during risk checking, and a risk of service interruption during conventional patrolling is reduced. Besides, by roughly determining the target position where the target optical fibers pass and then performing the same-routing risk test, the number of times of tests can be reduced, and the cost can be reduced. In addition, the sensing data of the two optical fibers are subjected to a comparison test, so the accuracy of risk checking of the optical fibers is also improved.

### BRIEF DESCRIPTION OF DRAWING(S)

FIG. 1 is a schematic structural diagram of a terminal\apparatus in a hardware running environment involved in a solution of embodiments of the present application.
FIG. 2 is schematic flowchart of a first embodiment of an optical fiber testing method in the present application.
FIG. 3 is schematic flowchart of a whole process of an optical fiber testing method in the present application.
FIG. 4 is a schematic diagram of a scene of cooling optical cables in an optical fiber testing method in the present application.
FIG. 5 is a schematic flowchart of an optical fiber testing method based on optical cable cooling in the present application.
FIG. 6 is a schematic diagram of a scene of heating optical cables in an optical fiber testing method in the present application.
FIG. 7 is a schematic flowchart of an optical fiber testing method based on optical cable heating in the present application.
FIG. 8 is a schematic diagram of a scene of a vibration event in an optical fiber testing method in the present application.
FIG. 9 is a schematic flowchart of an optical fiber testing method based on a vibration event in the present application.

Realization of the objective, functional features and advantages of the present application are further described with reference to accompanying drawings in conjunction with embodiments.

### DETAILED DESCRIPTION

It is to be understood that specific embodiments described here are merely for explaining the present application instead of limiting the present application.

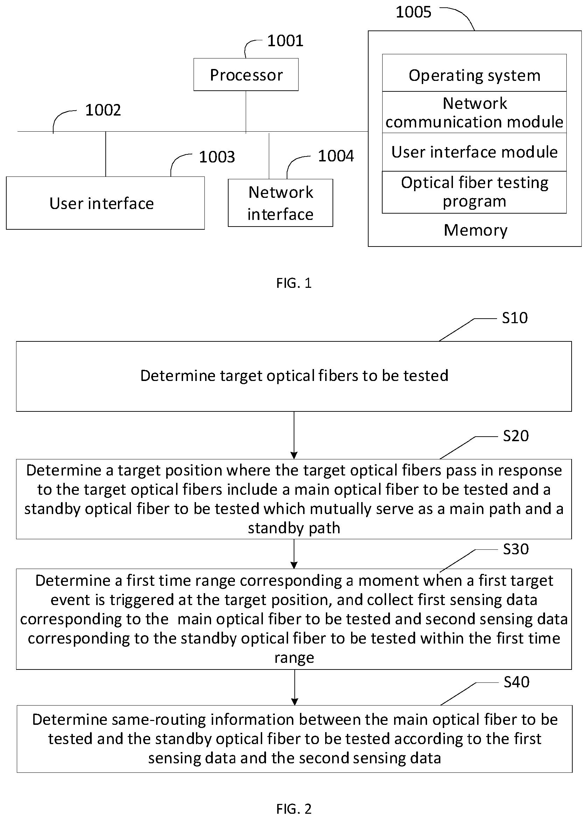

As shown in FIG. 1, FIG. 1 is a schematic structural diagram of a terminal in a hardware running environment involved in a solution of an embodiment of the present application.

The terminal in the embodiment of the present application is a device for testing an optical fiber.

As shown in FIG. 1, the terminal may include: a processor 1001, for example, a CPU, a network interface 1004, a user interface 1003, a memory 1005, and a communication bus 1002. The communication bus 1002 is configured to achieve connection communication between these components. The user interface 1003 may include a display and an input unit such as a keyboard. The user interface 1003 may also include a standard wired interface and a standard wireless interface. The network interface 1004 may include a standard wired interface and a standard wireless interface (such as a WI-FI interface). The memory 1005 may be a high-speed RAM memory, or a non-volatile memory, for example, a disk memory. The memory 1005 may also be a storage apparatus independent of the aforementioned processor 1001.

In an implementation, the terminal may also include a camera, a radio frequency (RF) circuit, a sensor, an audio circuit, a WiFi module, and the like. The sensor may be, for example, an optical sensor, a motion sensor and other sensors. Specifically, the optical sensor may include an ambient light sensor and a proximity sensor. The ambient optical sensor may adjust brightness of a display according to brightness of ambient light. The proximity sensor may close the display and/or backlight when the terminal device approaches an ear. Certainly, the terminal device may also be configured with a gyroscope, an air pressure gauge, a hygrometer, a thermometer, an infrared sensor and other sensors, which is not described in detail here.

Those skilled in the art may understand that a structure of the terminal shown in FIG. 1 does not constitute the limitation on the terminal and may also include more or less components than those shown in the figure, or a combination of some components or different arrangements of components.

As shown in FIG. 1, the memory 1005 used as a computer storage medium may include an operating system, a network communication module, a user interface module, and an optical fiber testing program.

In the terminal shown in FIG. 1, the network interface 1004 is mainly configured to be connected with a background server and perform data communication with the background server. The user interface 1003 is mainly configured to be connected with a client (a user side) and perform data communication with the client. The processor 1001 may be configured to call the optical fiber testing program stored in the memory 1005 and perform the following operations:

The present application provides optical fiber test. In a first embodiment of optical fiber test in the present application, referring to FIG. 2, an optical fiber testing method includes the following steps S10 to S40.

At Step S10, target optical fibers to be tested are determined.

An optical fiber sensing technology uses an optical fiber as a medium, and light as a carrier to sense and transmit an external signal. A fully-distributed optical fiber sensing technology usually uses light scattering or a nonlinear effect in the optical fiber, performs sensing in a principle of monitoring a corresponding change of some parameters of probing light in the optical fiber with change of an external environment, and mainly includes an optical fiber sensing technology based on rayleigh scattering, raman scattering and brillouin scattering.

A phase-sensitive optical time domain reflectometer (ΦOTDR) is a sensing technology based on rayleigh scattering, and performs sensing on an external environment by using a phase of scattered light. A position of an event may be directly positioned after demodulating a phase signal. ΦOTDR may not only implement detection for vibration, but also perform temperature sensing, and has an extremely high temperature resolution.

A raman optical time domain reflectometer (ROTDR) is based on raman scattering, anti-stokes light power of which is sensitive to a temperature change and stokes light of which is insensitive. Thus, temperature information along the optical fiber may be obtained in combination of a ratio of two temperature power with a positioning principle of an OTDR technology.

A brillouin optical time domain reflectometer (BOTDR) is based on brillouin scattering. A frequency difference between brillouin scattering light and incident light is called a brillouin frequency shift. As the brillouin frequency shift and power is in a linear relationship with a temperature and a strain of an environment where the optical fiber is located, a temperature or strain condition may be subjected to distributed sensing by detecting a change of a frequency shift or power of the brillouin scattering light in the optical fiber. Within a short time, the strain is regarded as an invariable, so temperature information may be obtained by demodulating a signal.

Testing of the optical fiber is difficult at present, so in the present embodiment, for improving the accuracy of testing of the optical fiber, optical cable routing patrolling and same-routing risk checking are performed by monitoring a temperature change condition or external vibration information of the optical cable by using ΦOTDR/BOTDR/ROTDR or another optical fiber sensing technology while an optical transport network (OTN)/dense wavelength division multiplexing (DWDM) network works normally. In the optical cable routing patrolling or service same-routing risk checking manner based on external vibration or temperature change, resource management information of an optical cable position is modified and supplemented in an OTN network operation and maintenance stage by using a sensing apparatus, so as to guarantee effectiveness and service survivability of a protection mechanism.

Thus, in the present embodiment, the target optical fiber needing to be tested needs to be determined first, the target optical fiber is connected with the sensing apparatus, and while the target optical fiber is tested, the first target event may be exerted on the target optical fiber, including a temperature change event, a vibration event or the like. For example, rapid cooling is performed in a liquid nitrogen spraying manner or the like, or an optical cable where the target optical fiber is located is heated by using a heating apparatus, or a target event is exerted on the optical cable where the target optical fiber is located in a manner of beating a tube well cover by a rubber hammer apparatus, or the like. A manner of exerting the target event may be actively performed by a user or preset in a system, and the target event is automatically exerted in a certain regularity on the optical cable where the target optical fiber is located. Besides, sensing data of the optical cable where the target optical fiber is located is collected in real time, when the collected sensing data has a significant difference before and after exerting the first target event, for example, within time of a temperature change, a significant temperature change degree of the sensing data is also monitored, so it may be recognized that the optical cable passes through this route or tube well, optical cable patrolling is implemented, and modifying and supplementing of the resource management information are completed. When a pair of optical fibers which mutually serve as a main path and a standby path are located in a same-routing state, a similar external event (namely, the first target event) is monitored through the ΦOTDR/BOTDR/ROTDR or another optical fiber sensing technology in spite of being in the same optical cable or in the same tube well, then a similarity value between sensing data corresponding to two optical fibers collected in a time before and after exerting the target event is calculated, it is judged according to the similarity value that main and standby services have a risk of same routing, and it is reported to a resource management system. A control side adjusts a service path according to the above information to avoid the risk of same routing and guarantee effectiveness and service survivability of the protection mechanism.

At Step S20, upon the condition that the target optical fibers include a main optical fiber to be tested and a standby optical fiber to be tested which mutually serve as a main path and a standby path, a target position where the target optical fibers pass is determined.

In the present embodiment, when the determined target optical fibers include the two optical fibers which mutually serve as the main path and the standby path, namely, the main optical fiber to be tested and the standby optical fiber to be tested, a test of the same-routing risk needs to be performed on the main optical fiber to be tested and the standby optical fiber to be tested. The main optical fiber to be tested and the standby optical fiber to be tested may be in the same optical cable, or in different optical cables. For example, if a user terminal discovers that there is a network fault during network communication via the main optical fiber to be tested, it needs to be switched to the standby optical fiber to be tested, in this case, for guaranteeing normal operating of the network communication, the main optical fiber to be tested and the standby optical fiber to be tested need to be prevented from being located in the same route. In addition, during the test of the same-routing risk, a target position where the main optical fiber to be tested and/or the standby optical fiber to be tested pass(es) needs to be determined first, by exerting the corresponding first target event on the target position, such as the temperature adjustment event or the vibration event, where the temperature adjustment event includes heating or cooling, and monitoring in real time whether the main optical fiber to be tested and the standby optical fiber to be tested have a great change of sensing data within a time range before and after exerting the corresponding first target event on the target position, so whether there is the same-routing risk between the main optical fiber to be tested and the standby optical fiber to be tested is determined. The target position may be a position where the target optical fibers pass, for example, during open-air laying of the optical cable and patrolling, the target event may be exerted on the optical cable laid in open air, and the position where the target event is exerted on the optical cable may be the target position. Besides, the target position may also include a tube well where the target optical fiber passes.

At Step S30, a first time range corresponding to a moment when a first target event is triggered at the target position is determined, and first sensing data corresponding to the main optical fiber to be tested and second sensing data corresponding to the standby optical fiber to be tested are collected within the first time range.

In the present embodiment, during the test of the same-routing risk, a sensing apparatus needs to be connected with the main optical fiber to be tested, so as to collect the sensing data of the main optical fiber to be tested in real time. A sensing apparatus is connected with the standby optical fiber to be tested so as to collect the sensing data of the standby optical fiber to be tested in real time. The sensing apparatus connected with the main optical fiber to be tested and the sensing apparatus connected with the standby optical fiber to be tested may be the same sensing apparatus or different sensing apparatuses, which is not limited here. For example, when the sensing apparatus connected with the main optical fiber to be tested and the sensing apparatus connected with the standby optical fiber to be tested are not the same sensing apparatus, namely, when two sensing apparatuses are connected into a system at the same time, the first target event may be triggered once, and within the corresponding time range, the first sensing data corresponding to the main optical fiber to be tested and the second sensing data corresponding to the standby optical fiber to be tested are collected at the same time. When the sensing apparatuses connected with the main optical fiber to be tested and the sensing apparatus connected with the standby optical fiber to be tested may be the same sensing apparatus, the sensing apparatus needs to be connected into the main optical fiber to be tested and the standby optical fiber to be tested in sequence, or connected into the main optical fiber to be tested and the standby optical fiber to be tested in sequence by using a device such as an optical switch. In this case, the first target event needs to be triggered twice, for example, the first sensing data of the main optical fiber to be tested is collected when the first target event is triggered for the first time, and the second sensing data of the standby optical fiber to be tested is collected when the first target event is triggered for the second time.

In an embodiment, during the test of the same-routing risk, the first target event needs to be exerted on the target position, so that the first target event is triggered for the target optical fibers at the target position. When the first target event is the temperature adjustment event, such as a heating event or a cooling event, the sensing data collected by the sensing apparatus is temperature data. When the first target event is the vibration event, the sensing data collected by the sensing apparatus is vibration data. During collection of the sensing data, the first time range corresponding to the moment when the first target event is triggered for the target optical fibers at the target position needs to be determined. In the present embodiment, a period of time before and after the moment when the first target event is triggered for the target optical fibers at the target position may be used as the first time range. For example, if the sensing apparatus collects sensing data in 10 minutes, and the first target event is triggered for the target optical fibers at the target position from the third minute within the 10 minutes, the 10 minutes are used as the first time range. The sensing apparatus uploads the collected first sensing data corresponding to the main optical fiber to be tested and the collected second sensing data corresponding to the standby optical fiber to be tested within the first time range to the system, so that the same-routing risk is judged in the system according to the first sensing data and the second sensing data.

At Step S40, same-routing information between the main optical fiber to be tested and the standby optical fiber to be tested is determined according to the first sensing data and the second sensing data.

After the first sensing data and the second sensing data are obtained, similarity comparison between the first sensing data and the second sensing data may be performed, and the same-routing information between the main optical fiber to be tested and the standby optical fiber to be tested is checked according to a comparison result of the similarity comparison. Besides, in an embodiment, when there are a plurality of target positions, the test of the same-routing risk may be performed on the target optical fibers at each target position in the same manner, namely, the step of determining the first time range corresponding to the moment when the first target event is triggered at the target position is performed on the target optical fibers in each target position, and it may be considered that a same-routing section exists between the main optical fiber to be tested and the standby optical fiber to be tested as long as there is a same-routing risk according to a test result of the same-routing risk at one of target positions.

In addition, in a normal working stage of a network, the present embodiment may implement vibration or temperature monitoring for an optical fiber in an OTN/DWDM network, performs patrolling for the optical cable and supplements or correct resource management information. Whether there is the same-routing risk in paths of main and standby services may also be checked, it is reported to the resource management system, the risk is avoided in advance, and network survivability is greatly improved. The optical cable does not need to be pulled, and the risk of service interruption caused possibly by convention patrolling is substantially reduced. A connecting-in manner is flexible, only an idle core and an optical fiber port are needed. Cost of ROTDR is the lowest, and the same demand may be met on the premise of low distance requirement. Routing patrolling may also be performed on the optical fiber whose resource management information is inaccurate, the same-routing risk in the main and standby services in the network may also be recognized, and a path is replanned for the same-routing services, and effectiveness of the protection mechanism is guaranteed.

Besides, for helping to understand flows of a principle of optical fiber testing in the present embodiment, a description is made below by taking an example.

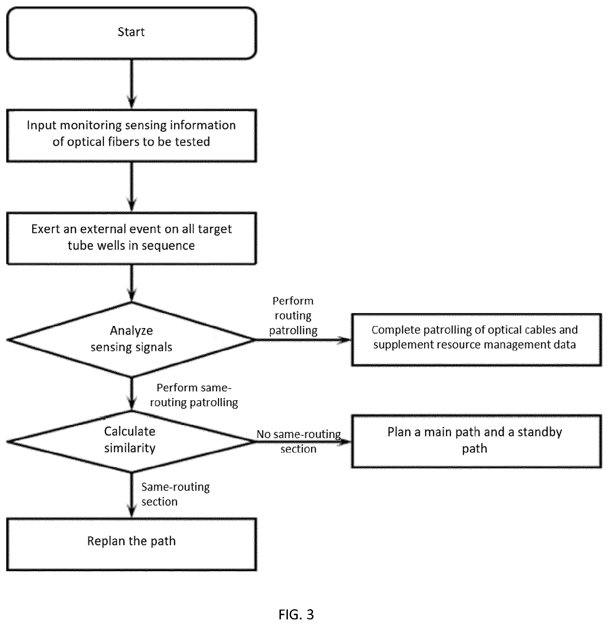

For example, as shown in FIG. 3, when the testing is started, monitoring sensing information of a to-be-tested optical fiber is input to a testing apparatus. The sensing apparatus is arranged in the testing apparatus. Then, an external event is exerted at all target positions in sequence. The target positions are positions where the to-be-tested optical cable passes. The external event is a target event, such as heating, cooling and vibration. Then, a collected sensing signal is analyzed. If it is routing patrolling, optical cable patrolling is completed and resource management data is supplemented. If it is the same-routing checking, a comparison of sensing data is performed, a comparison method may be similarity calculation, namely, similarity between the first sensing data and the second sensing data is calculated, whether there is the same-routing section is determined according to a similarity result, or whether there is the same-routing section may also be determined according to man-made experience, which is not limited here. If it is determined according to the result that there is no same-routing section, the main and standby paths may be planned. If there is the same-routing section according to the calculation result, the paths need to be replanned.

The sensing apparatus, before and after triggering the target event, may collect a data result of sensing data of a temperature curve or a vibration curve with change of time and a distance. When a plurality of positions need to be checked, data needs to be collected repeatedly. Moreover, if the routing patrolling for the optical cable needs to be performed, whether the to-be-tested optical cable passes the position is judged according to the sensing signal, so as to supplement resource management data. If the same-routing checking needs to be performed, sensing data of the to-be-tested optical cable is judged. If it is determined that the same-routing section exists, it is reported to the resource management system, and the paths need to be replanned so as to avoid the same-routing risk. If there is no same-routing section, the main and standby paths may be planned.

In the present embodiment, target optical fibers to be tested are determined at first, the target position where the target optical fibers pass is determined in a case where the target optical fibers include the main optical fiber to be tested and the standby optical fiber to be tested which mutually serve as the main path and the standby path, then the first sensing data corresponding to the main optical fiber to be tested and the second sensing data corresponding to the standby optical fiber to be tested are collected within the first time range which is before and after the moment when the first target event is triggered at the target position, and then risk checking of the same-routing information is performed according to the first sensing data and the second sensing data, so that it is not required to pull optical fibers during risk checking, and a risk of service interruption during conventional patrolling is reduced. Besides, by roughly determining the target position where the target optical fibers pass and then performing the same-routing risk test, the number of times of tests can be reduced, and the cost can be reduced. In addition, the sensing data of the two optical fibers are subjected to a comparison test, so the accuracy of risk checking of the optical fibers is also improved.

Based on the above first embodiment of the present application, a second embodiment of an optical fiber testing method in the present application is provided, in the present embodiment, step S40 of the above embodiment, namely, determining the same-routing information between the main optical fiber to be tested and the standby optical fiber to be tested according to the first sensing data and the second sensing data includes the steps a and b as follows.

At step a, a similarity value between the first sensing data and the second sensing data is calculated.

At step b, in response to that the similarity value is greater than a preset threshold, it is determined that the main optical fiber to be tested and the standby optical fiber to be tested have a same-routing section.

In the present embodiment, after the first sensing data corresponding to the main optical fiber to be tested and the second sensing data corresponding to the standby optical fiber to be tested are obtained through the sensing apparatus, as there may be a plurality of first sensing data and a plurality of second sensing data, the similarity value between the first sensing data and the second sensing data within a range of a period may be determined, and whether the similarity value is greater than the preset threshold is tested. It may be determined directly that the same-routing section exists between the main optical fiber to be tested and the standby optical fiber to be tested when the similarity value is greater than the preset threshold. The preset threshold for the similarity comparison may be an empirical value set by a user according to experiences. Besides, the similarity value may be calculated through an existing method such as self-correlation or convolution.

In a scene, whether the first target event occurs to the first sensing data and whether the first target event occurs to the second sensing data may also be judged according to the human experience, when the first target event occurs to the both first sensing data and second sensing data, it may be determined that the main optical fiber to be tested and the standby optical fiber to be tested have the same-routing section.

After determining that the main optical fiber to be tested and the standby optical fiber to be tested have the same-routing section, information that the main optical fiber to be tested and the standby optical fiber to be tested have the same-routing section may be reported and stored as resource management information, so as to supplement and complete the resource management information corresponding to the main optical fiber to be tested and the standby optical fiber to be tested.

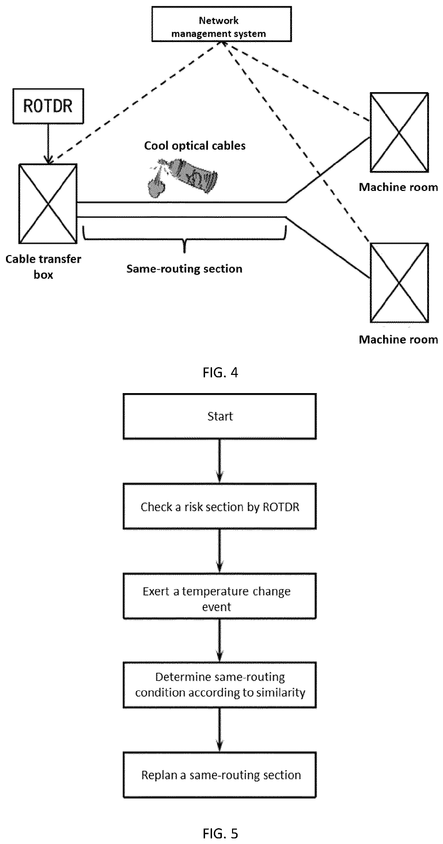

In the present embodiment, checking of the same-routing risk may be performed based on ROTDR. For example, as shown in FIG. 4, a network management system, machine rooms, the ROTDR, and a cable transfer box are included, and the target event such as cooling the optical cable is exerted on the same-routing section possibly existing in the target optical fibers. Besides, in FIG. 4, it may be discovered through a test based on existing resource management information that there are two optical fibers, namely the main optical fiber to be tested and the standby optical fiber to be tested which are mutually in a relationship of main and standby services, it is determined that the two optical fibers, when passing through a certain road at the same time, are possibly laid at the same position, such as in a tube well, so the same-routing risk exists. Thus, the same-routing section may be confirmed by using the ROTDR, and the same-routing risk is avoided. For example, as shown in FIG. 5, it is discovered through an analysis based on the existing resource management information that the two optical fibers which mutually serve as the main path and the standby path pass through a certain road at the same time, and for checking the same-routing section and in view of operation convenience, the ROTDR meter is connected to idle optical fibers of two routes through the cable transfer box on the road. Operation and maintenance staff reach the road marked on the resource management information, open key tube wells along the road and exert a temperature change event on each key tube well. That is, ROTDR temperature data of the two optical fibers are recorded first, if an external natural temperature is high, cooling treatment may be performed on the optical cable in the tube well through a cooling apparatus, then temperature data is collected and transmitted to a centralized network management system, a similarity calculation is performed on the temperature data before and after each cooling operation, and a same-routing condition is judged according to the similarity. If it is discovered that a cooling event that the similarity exceeds the set threshold occurs to the two optical cables within a certain distance, it may be determined that two paths corresponding to the two optical cables are in the same route on this section of road, a corresponding optical fiber distance may be obtained, a risk of a failure of the protection mechanism exists, and the same-routing section needs to be replanned.

In the present embodiment, by determining that the main optical fiber to be tested and the standby optical fiber to be tested have the same-routing section in response to that the similarity value between the first sensing data and the second sensing data is greater than the preset threshold, the accuracy of the test of the same-routing risk is ensured.

In an implementation, after calculating the similarity value between the first sensing data and the second sensing data, the method further includes step c.

At step c, in response to that a similarity value corresponding to each target position is less than or equal to the preset threshold, it is determined that the main optical fiber to be tested and the standby optical fiber to be tested have no same-routing section.

In the present embodiment, no same-routing section may mean that there is no same-routing section. Thus, during judgment of the same-routing risk, only one target position is included in a section of road where the main optical fiber to be tested and the standby optical fiber to be tested pass at the same time, a test only needs to be performed on the one target position.

In an embodiment, when there is one target position, and the similarity value between the first sensing data and the second sensing data is calculated to be less than or equal to the preset threshold, it may be determined directly that no same-routing section exists between the main optical fiber to be tested and the standby optical fiber to be tested. That is, the main optical fiber to be tested and the standby optical fiber to be tested have no same-routing section.

In an embodiment, when there are a plurality of target positions, the same test manner is needed for each target position, namely, the calculation and comparison of the similarity value may be performed repeatedly, it is determined that the main optical fiber to be tested and the standby optical fiber to be tested have no same-routing section only when the similarity value corresponding to each target position is less than or equal to the preset threshold, namely, the same-routing risk does not exist, and a user side may use the standby optical fiber to be tested normally under a condition that the main optical fiber to be tested cannot be used.

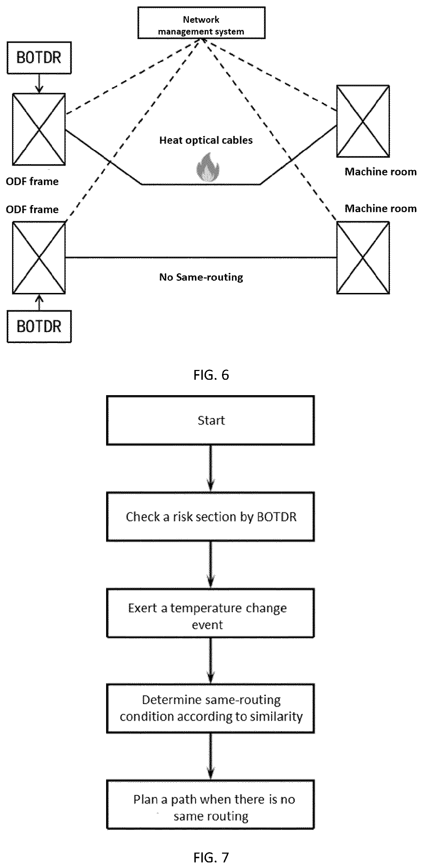

Besides, during checking of the same-routing risk based on BOTDR, as shown in FIG. 6, the network system, the machine room, an ODF, the BOTDR and two optical fibers (the main optical fiber to be tested and the standby optical fiber to be tested) corresponding not to the same route, and the target event is heating the optical cable. FIG. 6 shows an example where a main service and a standby service are not in the same route and the risk checking is performed by using the BOTDR. The two optical fibers are planned and set as a transmission path and a standby path for a service respectively. Due to long time after optical cable laying and change of a route, the existing resource management information is inaccurate, the two paths, namely, the main path and the standby path need to be checked, so as to avoid the same-routing risk. Thus, for the two optical fibers of the to-be-planned main path and standby path, the same-routing risk needs to be checked. A general trend of only one optical fiber is obtained based on the existing resource management information. Thus, checking is performed at positions along the trend. The BOTDR meter is connected to the idle optical fibers of the two routes through the ODF in the machine room.

The operation and maintenance staff reach the position of the road in the general trend of the optical fiber, open the tube well on a key position and start to record BOTDR temperature data of the two optical fibers at the moment. As stress borne by the optical cable within a short time almost does not change, it may be believed that the BOTDR is sensitive only to a temperature change. As an external natural temperature is low, a heating operation is performed on the optical cable at the position through an electric heating apparatus. Sensing information is transmitted to the centralized network management system, the similarity calculation is performed on temperature data before and after each heating operation, and it is discovered that one optical fiber has an obvious temperature rise event and the other optical fiber does not have the similar event. The similarity of the two optical fibers does not exceed the threshold. In this case, one of the main path and standby path is at the heating position, the other one is not at the heating position. The operation is repeatedly performed at the position along the trend, if the similarity of all the sensing data does not exceed the threshold, the same-routing section does not exist between the two routes on the path, the failure of the protection mechanism is not caused, and the two routes may be planned as the main path and the standby path. As shown in FIG. 7, the risk section is checked by using the BOTDR, then the temperature change event is exerted, the same-routing condition is judged according to the similarity, and if it is not the same route, a path may be planned for the non-same route.

In the present embodiment, according to the number of the target positions and whether the corresponding similarity value is less than or equal to the preset threshold, whether the main optical fiber to be tested and the standby optical fiber to be tested have no same-routing section is determined. Besides, after the similarity value corresponding to each target position is less than or equal to the preset threshold, it is determined that no same-routing section exists, so as to guarantee the accuracy of the test of the same-routing risk.

In an implementation, determining the target position where the main optical fiber to be tested and the standby optical fiber to be tested pass at the same time includes the steps as follows.

At step e, preset resource management information is obtained, and in response to that the main optical fiber to be tested and the standby optical fiber to be tested are determined to have a common road region by means of query based on the resource management information, all positions in the common road region are used as the target position.

Alternatively, at step f, in response to that a position of the main optical fiber to be tested is found and a position of the standby optical fiber to be tested is not found by means of query based on the resource management information, a position of the main optical fiber to be tested is used as the target position.

Alternatively, at step g, in response to that a position of the standby optical fiber to be tested is found and a position of the main optical fiber to be tested is not found by means of query based on the resource management information, the position of the standby optical fiber to be tested is used as the target position.

In the present embodiment, the resource management information stored in the system in advance needs to be obtained, the common road region or the tube well where the main optical fiber to be tested and the standby optical fiber to be tested pass at the same time is obtained by querying in the resource management information, the tube well where the main optical fiber to be tested and the standby optical fiber to be tested pass at the same time is used as the target position, and all the positions in the common road region are used as the target position. The common road region is a road region where the both main optical fiber to be tested and the standby optical fiber to be tested pass.

If only a position where one optical fiber passes is found by but a position where the other optical fiber passes is not found by means of query based on the resource management information, the found position is used as the target position. If the position where the main optical fiber to be tested passes is found and the position where the standby optical fiber to be tested passes is not found by means of query, the found position where the main optical fiber to be tested passes is used as the target position. If the position where the standby optical fiber to be tested passes is found and the position where the main optical fiber to be tested passes is not found by query, the found position where the standby optical fiber to be tested passes is used as the target position.

In the present embodiment, the position where the main optical fiber to be tested and/or the standby optical fiber to be tested pass(es) is queried based on the resource management information stored in the system in advance, and the found position is used as the target position, so as to guarantee the effectiveness in determining target position.

In an implementation, the first time range includes a first time subrange and a second time subrange.

Collecting the first sensing data corresponding to the main optical fiber to be tested and the second sensing data corresponding to the standby optical fiber to be tested within the first time range includes the following steps.

At step f, a first main sensing signal corresponding to the main optical fiber to be tested and a first standby sensing signal corresponding to the standby optical fiber to be tested are collected within the first time subrange which is before the moment when the first target event is triggered at the target position.

In the present embodiment, after the sensing apparatus is connected with the main optical fiber to be tested and the sensing apparatus is connected with the standby optical fiber to be tested, the sensing signal of the main optical fiber to be tested and the sensing signal of the standby optical fiber to be tested may be collected till a user inputs a corresponding instruction for terminating collection of the sensing signal, or when the sensing apparatus is disconnected with the main optical fiber to be tested and the standby optical fiber to be tested, collection of the sensing data is stopped.

Thus, in the present embodiment, the main sensing signal corresponding to the main optical fiber to be tested and the standby sensing signal corresponding to the standby optical fiber to be tested may be collected through the sensing apparatus till the first target event is triggered at the target position, a time range between a start time node when the sensing apparatus starts to collect the main sensing signal and/or the standby sensing signal and a triggering time node when the first target event is triggered at the target position is used as the first time subrange, the main sensing signal collected within the first time subrange is used as the first main sensing signal, and the standby sensing signal collected within the first time subrange is used as the first standby sensing signal.

At step g, a second main sensing signal corresponding to the main optical fiber to be tested and a second standby sensing signal corresponding to the standby optical fiber to be tested are collected within the second time subrange which is after the moment when the first target event is triggered at the target position.

After the first target event is triggered at the target position, the sensing apparatus may continue collecting the main sensing signal and the standby sensing signal till the sensing apparatus is disconnected with the main optical fiber to be tested and the standby optical fiber to be tested, or when the instruction, inputted by the user, for terminating collection of the sensing signal is received, collection of the sensing signal is stopped. In this case, a time range between a triggering time node when the first target event is triggered at the target position and a stop time node when the sensing apparatus stops collecting the sensing signal may be used as the second time subrange, the main sensing signal collected within the second time subrange is used as the second main sensing signal, and the standby sensing signal collected within the second time subrange is used as the second standby sensing signal.

At step h, the first main sensing signal and the second main sensing signal are used as the first sensing data, and the first standby sensing signal and the second standby sensing signal are used as the second sensing data.

The sensing signal types of the first main sensing signal, the second main sensing signal, the first standby sensing signal and the second standby sensing signal correspond to an event type of the first target event. For example, when the first target event is the temperature adjustment event, the sensing signal type is a temperature signal. When the first target event is the vibration event, the sensing signal type is a vibration signal.

In the present embodiment, the sensing signals are collected within the time range before and after the first target event is triggered at the target position, and then the first sensing data and the second sensing data are determined according to the sensing signals, so as to guarantee accuracy of the determined first sensing data and second sensing data.

In an implementation, collecting the first sensing data corresponding to the main optical fiber to be tested and the second sensing data corresponding to the standby optical fiber to be tested within the first time range includes the following.

At step i, a first idle optical fiber core corresponding to the main optical fiber to be tested is determined, and the first sensing data corresponding to the main optical fiber to be tested within the first time range is collected by a sensing apparatus connected with the first idle optical fiber core.

And at step j, a second idle optical fiber core corresponding to the standby optical fiber to be tested is determined, and the second sensing data corresponding to the standby optical fiber to be tested within the first time range is collected by a sensing apparatus connected with the second idle optical fiber core.

In the present embodiment, prior to performing the test of the same-routing risk, a fiber core in an idle state in the main optical fiber to be tested needs to be determined, and then used as the first idle optical fiber core. A fiber core in an idle state in the standby optical fiber to be tested is determined, and then used as the second idle optical fiber core.

A ΦOTDR/BOTDR/ROTDR or another optical fiber sensing apparatus is connected into the first idle optical fiber core, so as to collect the first sensing data corresponding to the main optical fiber to be tested within the first time range. The ΦOTDR/BOTDR/ROTDR or another optical fiber sensing apparatus is connected into the second idle optical fiber core, so as to collect the second sensing data corresponding to the standby optical fiber to be tested within the first time range.

A connecting manner may be that in the machine room, the optical fibers are connected into the sensing apparatus through the optical distribution frame (ODF), or through an interface in the cable transfer box. Besides, in the present embodiment, a plurality of sensing apparatuses may be used for simultaneously triggering the target event and collecting the sensing data, or one sensing apparatus may also be used for being connected into each optical fiber or optical cable in sequence to respectively trigger the first target event and collect the sensing data.

During checking of the same-routing risk for the to-be-tested optical cable, it needs to be determined that there is no break in the to-be-tested optical fiber in the to-be-tested optical cable, and it is already connected into the sensing apparatus, and then checking of the same-routing risk is performed. Besides, a centralized management unit may also be arranged for controlling a network corresponding to the to-be-tested optical cable, recoding each piece of resource management information and planning a service path. The centralized management unit may be but not limited to a webmaster, a software defined network (SDN)/software defined optical network (SDON) controller, and a path computation element (PCE). In addition, during checking of the optical cable, the sensing apparatus may also be connected into the target optical fiber in the same connecting-in manner. Thus, each of three types of optical fiber sensing apparatuses such as ΦOTDR/BOTDR/ROTDR may be independently meet two scenes such as the patrolling of the optical cable and checking of the same-routing risk. A checked object is a co-cable fiber core of an optical cable where the target optical fiber is located, namely, a physical route of the idle core represents a physical route of all fiber cores of this cable. Thus, when the idle cores are mutually in the same route, the co-cable main path and standby path are also the same route, vice versa.

In the present embodiment, by connecting the sensing apparatus with the first idle optical fiber core and the second idle optical fiber core, it can be guaranteed that the subsequently collected sensing data is accurate and effective without being interfered by other signal data.

In an implementation, after the step of determining the target optical fiber to be tested, the method further includes the following steps.

At step k, in response to that a missing section exists in the target optical fiber, a to-be-tested position where the target optical fiber possibly passes is queried according to preset resource management information.

And at step I, a second time range corresponding to a moment when a second target event is triggered at the to-be-tested position, third sensing data corresponding to the target optical fiber within the second time range is collected, and whether the to-be-tested position is a position where the target optical fiber passes is determined according to the third sensing data.

In the present embodiment, during the test of the optical fiber, patrolling of the optical cable may also be performed, namely, when it is discovered through querying in the obtained resource management information (namely, the resource management information) in the system that the missing section exists in the target optical fiber, patrolling of the optical cable needs to be performed, and all positions where the missing section passes are queried, so as to supplement the resource management information. The target optical fiber may be one optical fiber or a plurality of optical fibers. For example, the target optical fiber may be the main optical fiber to be tested or the standby optical fiber to be tested. In an embodiment, after the target optical fiber includes the main optical fiber to be tested and the standby optical fiber to be tested which mutually serve as the main path and the standby path, and when a missing section exists in at least one of the main optical fiber to be tested and the standby optical fiber to be tested, patrolling of the optical cable may be performed first, and then checking of the routing risk is performed after the positions where the missing section passes are queried.

In addition, during patrolling of the optical cable, the existing resource management information may be determined in a database. The resource management information may be resource management information. Then, the missing section of the to-be-tested optical cable is found in the resource management information, then a known road section or a direction of the machine room corresponding to the to-be-tested optical cable is determine according to the resource management information, a position where the to-be-tested optical cable possibly passes is estimated according to the existing road section or the direction of the machine room, and the position where the to-be-tested optical cable possibly passes is used as the to-be-tested position.

In the present embodiment, the second target event triggered at the to-be-tested position further needs to be determined. The second target event may be the same as the first target event or not, which is not limited here. Besides, the second target event may include at least one of a temperature adjustment event and a vibration event. The temperature adjustment event may be that cooling treatment is performed by using a cooling apparatus when a natural temperature of an environment where the to-be-tested optical cable is located is high. Alternatively, the temperature adjustment event may be that heating treatment is performed by using a heating apparatus when a natural temperature of an environment where the to-be-tested optical cable is located is low. The vibration event may be that the to-be-tested optical cable is caused to generate a vibration signal through a vibration apparatus.

Within the time range (namely, the second time range) before and after the second target event is triggered at the to-be-tested position, the to-be-tested position is judged according to the collected third sensing data corresponding to the target optical fiber, and when it is determined that a sensing signal corresponding to an actual target event exists in each piece of the collected third sensing data, it may be determined that the to-be-tested position is a position where the target optical fiber passes. If the sensing signal corresponding to the actual target event does not exist, it is determined that the to-be-tested position is not the position where the target optical fiber passes.

In the present embodiment, by performing patrolling of the to-be-tested position after the missing section exists in the target optical fiber, whether the to-be-tested position is the position where the target optical fiber passes is determined, and thus it is guaranteed that the patrolling test of the optical cable is effectively performed.

In an implementation, the first target event includes at least one of the temperature adjustment event or the vibration event; and the second target event includes at least one of the temperature adjustment event or the vibration event. In the present embodiment, the temperature adjustment event may include the heating event and the cooling event. Besides, the first target event may be the same as the second target event or not, which is not limited here.

In an implementation, the second time range includes a third time subrange and a fourth time subrange, and the third sensing data includes a third sensing signal and a fourth sensing signal.

The step of collecting the third sensing data corresponding to the target optical fiber within the second time range and determining whether the to-be-tested position is a position where the target optical fiber passes according to the third sensing data includes the following steps.

At step m, the third sensing signal corresponding to the target optical fiber is collected within the third time subrange which is before the moment when the second target event is triggered at the to-be-tested position.

At step n, the fourth sensing signal corresponding to the target optical fiber is collected within the fourth time subrange which is after the moment when the second target event is triggered at the to-be-tested position.

And at step o, in a case where a target signal change corresponding to the second target event exists between the third sensing signal and the fourth sensing signal, it is determined that the to-be-tested position is the target position where the target optical fiber passes.

In the present embodiment, after the sensing apparatus is connected with the target optical fiber, the sensing signal of the target optical fiber may be collected till the user inputs a corresponding instruction for terminating collection of the sensing signal, or when the sensing apparatus is disconnected with the target optical fiber, collection of the sensing data is stopped.

Thus, in the present embodiment, the sensing signal corresponding to the target optical fiber may be collected first through the sensing apparatus till the second target event is triggered at the to-be-tested position, a time range between a start time node when the sensing apparatus starts to collect the sensing signal and a triggering time node when the second target event is triggered at the to-be-tested position is used as the third time subrange, and the sensing signal collected within the third time subrange is used as the third main sensing signal.

After the second target event is triggered at the to-be-tested position, the sensing apparatus may continue collecting the sensing signal of the target optical fiber till the inputted instruction for terminating collection of the sensing signal is received, or when the sensing apparatus is disconnected with the target optical fiber, collection of the sensing signal is stopped. In this case, a time range between a triggering time node when the second target event is triggered at the to-be-tested position and a stop time node when the sensing apparatus stops collecting the sensing signal may be used as the fourth time subrange. The sensing signal collected within the fourth time subrange is used as the fourth main sensing signal. Besides, as the third sensing data includes the third sensing signal and the fourth sensing signal, it may be determined directly that the to-be-tested position is the target position where the target optical fiber passes when the target signal change corresponding to the second target event exists between the third sensing signal and the fourth sensing signal. A signal change between the third sensing signal and the fourth sensing signal is calculated, and the signal change, when exceeding a certain range, is used as the target signal change corresponding to the second target event.

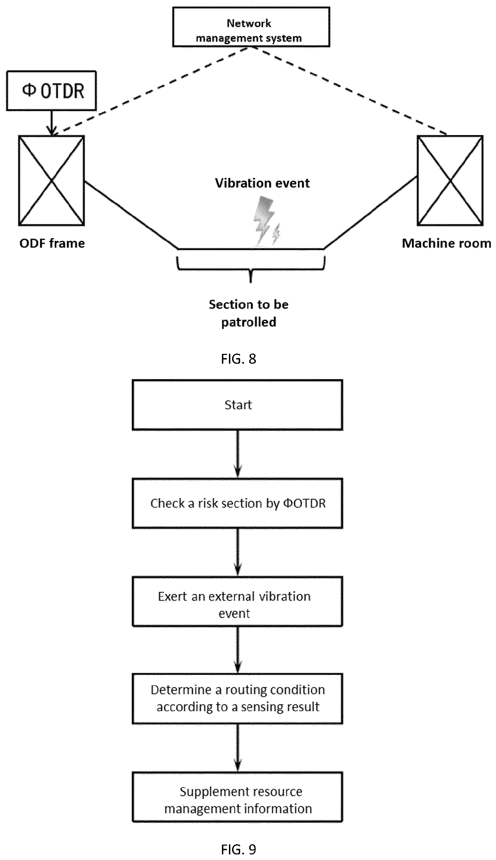

In addition, during patrolling of the optical cable, patrolling of the optical cable may be performed based on the ΦOTDR. For example, as shown in FIG. 8, the network management system, the machine room, the ODF, the ΦOTDR and a to-be-patrolled section of the to-be-tested optical cable are included, and the vibration event is exerted on the to-be-patrolled section. That is, the to-be-tested optical cable is positioned by using the ΦOTDR. Due to lone time of maintenance and complexity of the optical cable, missing of the resource management information is caused. A physical path of a certain middle section of a certain optical fiber is unknown. In the embodiment, accurate positioning is performed by using the ΦOTDR, a position route of the to-be-tested optical cable is obtained through patrolling, and the resource management information is supplemented. For another example, as shown in FIG. 9, based on the existing resource management information, the missing section of the to-be-tested optical cable is found, and a position where the optical cable possibly passes is estimated according to a known path or direction of the machine room. For performing patrolling of the optical cable, an idle optical fiber of this optical cable is found, and then the ΦOTDR meter is connected to work through the ODF in the machine room, so as to perform patrolling of the optical cable by using the ΦOTDR. The operation and maintenance staff reach a road where the route possibly passes, mark key positions along the road, exert the external vibration event on the key positions, and complete triggering of the target event of the positions at each key position in sequence. The sensing data collected after triggering the target event is transmitted into the centralized network management system, data processing is performed on the sensing data before and after each vibration event, a corresponding optical cable distance and whether the vibration event is triggered by the to-be-tested optical cable are analyzed, and if the vibration event is triggered, it is determined that the to-be-tested optical cable passes through the to-be-tested position. If the vibration event is not triggered, it is determined that the to-be-tested optical cable does not pass through the to-be-tested position. That is, a routing condition is judged according to a sensing result, and the resource management information is supplemented in the system.

In the present embodiment, by collecting the sensing signals within the second time range before and after the second target event is triggered at the to-be-tested position, the third sensing signal and the fourth sensing signal are obtained, and when the target signal change corresponding to the target event exists between the both, it is determined that the to-be-tested position is the target position where the target optical fiber passes, so it is guaranteed that the patrolling test of the optical cable is effectively performed.

In an implementation, after the step of determining the same-routing information between the main optical fiber to be tested and the standby optical fiber to be tested according to the first sensing data and the second sensing data, the method includes the following.

At step x, , in response to that the main optical fiber to be tested and the standby optical fiber to be tested have a same-routing section, routing information between the main optical fiber to be tested and the standby optical fiber to be tested is replanned till no same-routing section exists in replanned routing information, and the replanned routing information is supplemented to preset resource management information.

In the present embodiment, after determining the same-routing information between the main optical fiber to be tested and the standby optical fiber to be tested, and after determining that the same-routing section exists between the main optical fiber to be tested and the standby optical fiber to be tested according to the same-routing information, routing sections where the main optical fiber to be tested and the standby optical fiber to be tested pass need to be replanned, so that a routing section where the main optical fiber to be tested passes does not coincide with a routing section where the standby optical fiber to be tested passes, that is, there is no same-routing section, in this case, the replanned routing sections where the main optical fiber to be tested and the standby optical fiber to be tested pass may be obtained again and used as replanned routing information, and in this case, the replanned routing information may be supplemented into the preset resource management information in the system, so as to complete routing information of the main optical fiber to be tested and the standby optical fiber to be tested.

In the present embodiment, after the same-routing section exists between the main optical fiber to be tested and the standby optical fiber to be tested, the routing information between the main optical fiber to be tested and the standby optical fiber to be tested may be replanned till no same-routing section exists between the both, and then the routing information is supplemented into the resource management information, so as to reduce occurrence of the same-routing section, and directly plan the main path and the standby path subsequently.

Besides, the present application further provides a device for testing an optical fiber. The device for testing the optical fiber includes: a memory, a processor and an optical fiber testing program stored on the memory. The processor is configured to execute the optical fiber testing program, so as to implement the steps of the above optical fiber testing method in each embodiment.

The present application further provides a computer-readable storage medium. The computer-readable storage medium stores one or more than one program. The one or more than one program may also be executed by one or more than one processor so as to implement the steps of the above optical fiber testing method in each embodiment.

A specific implementation of the computer-readable storage medium of the present application is basically the same as each embodiment of the above optical fiber testing method, which is not described in detail here.

It is to be noted that terms "comprise", "include" or any other variant thereof herein intend to cover a non-exclusive inclusion, so that a process, method, object or system including a series of elements not only includes those elements, but also includes other elements not listed clearly, or further includes inherent elements of this process, method, object or system. Without more limitations, an element defined by the sentence "including one" does not exclude that there are still other same elements in the process, method, object, or system including the element.

The above sequence numbers of the embodiments of the present application are only for description and do not represent superiority and inferiority of the embodiments.

According to the descriptions in the foregoing implementations, those skilled in the art may clearly learn that the method according to the foregoing embodiment may be implemented by relying on software and a necessary general-purpose hardware platform or certainly by using hardware, but in most of cases, the former is the better implementation. Based on such an understanding, the technical solutions of the present application essentially, or a part contributing to the prior art, may be presented in a form of a software product. The computer software product is stored in the above storage medium (for example, a ROM/RAM, a magnetic disk, or an optical disc), which includes several instructions to enable a terminal device (which may be a mobile phone, a computer, a server, an air conditioner, a network device, or the like) to perform the methods described in the embodiments of the present application.

The above is only optional embodiments of the present application instead of limiting the scope of the patent of the present application. Equivalent structures or equivalent flow transformations made by using the contents of the specification and the accompanying drawings of the present application, or being applied to the other related art directly or indirectly may be included within the scope of the patent protection of the present application in the same way.

## Claims

1. An optical fiber testing method, comprising:
determining target optical fibers to be tested;
determining, upon the condition that the target optical fibers comprise a main optical fiber to be tested and a standby optical fiber to be tested which mutually serve as a main path and a standby path, a target position where the target optical fibers pass;
determining a first time range corresponding to a moment when a first target event is triggered at the target position, and collecting first sensing data corresponding to the main optical fiber to be tested and second sensing data corresponding to the standby optical fiber to be tested within the first time range; and
determining, according to the first sensing data and the second sensing data, same-routing information between the main optical fiber to be tested and the standby optical fiber to be tested.

2. The optical fiber testing method according to claim 1, wherein determining, according to the first sensing data and the second sensing data, the same-routing information between the main optical fiber to be tested and the standby optical fiber to be tested comprises:
calculating a similarity value between the first sensing data and the second sensing data; and
determining, in response to that the similarity value is greater than a preset threshold, that the main optical fiber to be tested and the standby optical fiber to be tested have a same-routing section.

3. The optical fiber testing method according to claim 2, after calculating the similarity value between the first sensing data and the second sensing data, further comprising:
determining, in response to that a similarity value corresponding to each target position is less than or equal to the preset threshold, the main optical fiber to be tested and the standby optical fiber to be tested have no same-routing section.

4. The optical fiber testing method according to claim 1, wherein determining the target position where the target optical fibers pass comprises:
obtaining preset resource management information, and
using, in response to that the main optical fiber to be tested and the standby optical fiber to be tested are determined to have a common road region by means of query based on the resource management information, all positions in the common road region as the target position; or
using, in response to that a position of the main optical fiber to be tested is found and a position of the standby optical fiber to be tested is not found by means of query based on the resource management information, the position of the main optical fiber to be tested as the target position; or
using, in response to that a position of the standby optical fiber to be tested is found and a position of the main optical fiber to be tested is not found by means of query based on the resource management information, the position of the standby optical fiber to be tested as the target position.

5. The optical fiber testing method according to claim 1, wherein the first time range comprises a first time subrange and a second time subrange, and
collecting the first sensing data corresponding to the main optical fiber to be tested and the second sensing data corresponding to the standby optical fiber to be tested within the first time range comprises:
collecting a first main sensing signal corresponding to the main optical fiber to be tested and a first standby sensing signal corresponding to the standby optical fiber to be tested within the first time subrange which is before the moment when the first target event is triggered at the target position;
collecting a second main sensing signal corresponding to the main optical fiber to be tested and a second standby sensing signal corresponding to the standby optical fiber to be tested within the second time subrange which is after the moment when the first target event is triggered at the target position; and
using the first main sensing signal and the second main sensing signal as the first sensing data, and using the first standby sensing signal and the second standby sensing signal as the second sensing data.

6. The optical fiber testing method according to claim 1, wherein collecting the first sensing data corresponding to the main optical fiber to be tested and the second sensing data corresponding to the standby optical fiber to be tested within the first time range comprises:
determining a first idle optical fiber core corresponding to the main optical fiber to be tested, and collecting, by a sensing apparatus connected with the first idle optical fiber core, the first sensing data corresponding to the main optical fiber to be tested within the first time range; and
determining a second idle optical fiber core corresponding to the standby optical fiber to be tested, and collecting, by a sensing apparatus connected with the second idle optical fiber core, the second sensing data corresponding to the standby optical fiber to be tested within the first time range.

7. The optical fiber testing method according to claim 1, after the step of determining the target optical fibers to be tested, further comprising:
querying, in response to that a missing section exists in the target optical fiber, a to-be-tested position where the target optical fiber possibly passes according to preset resource management information; and
determining a second time range corresponding to a moment when a second target event is triggered at the to-be-tested position, collecting third sensing data corresponding to the target optical fiber within the second time range, and determining whether the to-be-tested position is a position where the target optical fiber passes according to the third sensing data.

8. The optical fiber testing method according to claim 7, wherein the second time range comprises a third time subrange and a fourth time subrange, the third sensing data comprises a third sensing signal and a fourth sensing signal, and
the step of collecting the third sensing data corresponding to the target optical fiber within the second time range and determining whether the to-be-tested position is a position where the target optical fiber passes according to the third sensing data comprises:
collecting the third sensing signal corresponding to the target optical fiber within the third time subrange which is before the moment when the second target event is triggered at the to-be-tested position;
collecting the fourth sensing signal corresponding to the target optical fiber within the fourth time subrange which is after the moment when the second target event is triggered at the to-be-tested position; and
determining, in a case where a target signal change corresponding to the second target event exists between the third sensing signal and the fourth sensing signal, that the to-be-tested position is the target position where the target optical fiber passes.

9. The optical fiber testing method according to claim 7, wherein the first target event comprises at least one of a temperature adjustment event or a vibration event; and the second target event comprises at least one of a temperature adjustment event or a vibration event.

10. The optical fiber testing method according to claim 1, after the step of determining, according to the first sensing data and the second sensing data, the same-routing information between the main optical fiber to be tested and the standby optical fiber to be tested, further comprising:
replanning, in response to that the main optical fiber to be tested and the standby optical fiber to be tested have a same-routing section, routing information between the main optical fiber to be tested and the standby optical fiber to be tested till there is no same-routing section in replanned routing information, and supplementing the replanned routing information to preset resource management information.

11. An electronic device, comprising: a processor; and a memory configured to store a computer-executable instruction, wherein the executable instruction, when executed, causes the processor to perform steps of the optical fiber testing method according to any one of claims 1 to 10.

12. A computer-readable storage medium, storing one or more programs, wherein the one or more programs, when executed by an electronic device comprising a plurality of application programs, cause the electronic device to perform steps of the optical fiber testing method according to any one of claims 1 to 10.
